(19) Europäisches Patentamt / European Patent Office / Office européen des brevets

(11) **EP 1 471 669 B1**

(12) **EUROPEAN PATENT SPECIFICATION**

(45) Date of publication and mention
of the grant of the patent:
**09.09.2009 Bulletin 2009/37**

(51) Int Cl.:
***H04B 10/18*** (2006.01)

(21) Application number: **04009415.3**

(22) Date of filing: **21.04.2004**

(54) **Optical transmission system**

Optisches Übertragungssystem

Système de transmission optique

(84) Designated Contracting States:
**FR GB IT**

(30) Priority: **22.04.2003 JP 2003117276**

(43) Date of publication of application:
**27.10.2004 Bulletin 2004/44**

(73) Proprietor: **Sumitomo Electric Industries, Ltd.
Osaka-shi, Osaka 541-0041 (JP)**

(72) Inventor: **Okuno, Toshiaki
Sakae-ku
Yokohama-shi
Kanagawa (JP)**

(74) Representative: **HOFFMANN EITLE
Patent- und Rechtsanwälte
Arabellastrasse 4
81925 München (DE)**

(56) References cited:
• **TANAKA M ET AL OPTICAL SOCIETY OF AMERICA / INSTITUTE OF ELECTRICAL AND ELECTRONICS ENGINEERS: "Water-peak-suppressed non-zero dispersion shifted fiber for full spectrum comes WDM transmission in metro networks" OPTICAL FIBER COMMUNICATION CONFERENCE AND EXHIBIT. (OFC). TECHNICAL DIGEST. POSTCONFERENCE DIGEST. ANAHEIM, CA, MARCH 17 - 22, 2002, TRENDS IN OPTICS AND PHOTONICS SERIES. (TOPS), WASHINGTON, DC : OSA, US, vol. TOPS. VOL. 70, 17 March 2002 (2002-03-17), pages 171-173, XP010617705 ISBN: 1-55752-701-6**
• **SOGAWA I ET AL: "Study on Full Spectrum Directly Modulated CWDM Transmission of 10 Gb/s per Channel over Water-peak-suppressed Non-zero Dispersion Shifted Fiber" OPTICAL COMMUNICATION, 2002. ECOC 2002. 28TH EUROPEAN CONFERENCE ON COPENHAGEN, DENMARK 08-12 SEPT. 2002, PISCATAWAY, NJ, USA,IEEE, 8 September 2002 (2002-09-08), pages 1-2, XP010898125 ISBN: 87-90974-63-8**

EP 1 471 669 B1

## Description

BACKGROUND OF THE INVENTION

Field of the Invention

The present invention relates to an optical transmission system.

Description of the Background Art

In a wavelength division multiplexing (WDM) system, a plurality of signals having different wavelengths are multiplexed so that they can be sent over an optical fiber transmission line. The system enables the transmission of a large amount of information over a long distance. In recent years, the optical transmission system has been strongly required to further increase both the transmission capacity and the transmission distance. However, an increase in bit rate to increase the transmission capacity would decrease the system's dispersion tolerance. An increase in the length of an optical fiber transmission line to increase the transmission distance would increase the absolute value of the accumulated dispersion of the entire transmission line, causing the signal degradation.

In addition, in recent years, the optical transmission system has been strongly required to reduce the cost. To meet this requirement, in many cases, a directly modulated light source, which requires no external modulator, is used as the light source for the signal lightwave. However, when a directly modulated light source is used, the direct modulation generates a positive chirp in the signal lightwave. As a result, the accumulated dispersion increases its effect on the signal lightwave, increasing the signal degradation. With respect to this problem, it is known that in an optical transmission system incorporating a directly modulated light source, the use of a negative-dispersion fiber as the optical fiber transmission line can improve the transmission property in comparison with the system using a positive-dispersion fiber. (See, for example, Optics Letters, Vol. 13, No. 11 (1988), p. 1035 or ECOC 2000, Vol. 1, p. 97.)

However, conventional optical transmission systems incorporating directly modulated light sources have been designed on the precondition that they would be operated in an narrow wavelength range, such as a 1550-nm band, even when they employ negative-dispersion fibers. For example, the optical fiber stated in the report "OFC 2002, WA2" has a dispersion slope whose absolute value is high. Consequently, the difference in chromatic dispersion between wavelengths is large, and therefore the suitably operable wavelength is limited to a narrow range. If this narrow range can be broadened, the number of transmission channels can be increased, so that further increased large-capacity optical transmission can be expected. In particular, when the coarse-WDM (C-WDM) optical transmission, which has relatively broad wavelength spacing, is performed, it is essential to provide a broad usable wavelength range.

SUMMARY OF THE INVENTION

An object of the present invention is to offer an optical transmission system that enables the optical transmission incorporating directly modulated light sources to be performed in a broad band.

According to the present invention, the foregoing object is attained by offering an optical transmission system that comprises:

(a) at least one directly modulated light source that generates and outputs a signal by direct modulation; and
(b) at least one optical fiber that:

(b1) constitutes the principal portion of an optical transmission line at at least one repeater section;
(b2) transmits a signal lightwave carrying at least one signal outputted by the at least one directly modulated light source;
(b3) has a chromatic dispersion that is negative at at least one wavelength of the signal lightwave; and
(b4) has a dispersion slope of at most 0.05 ps/nm$^2$/km in absolute value at the at least one wavelength.

Advantages of the present invention will become apparent from the following detailed description, which illustrates the best mode contemplated to carry out the invention. The invention can also be carried out by different embodiments, and their details can be modified in various respects, all without departing from the invention. Accordingly, the accompanying drawing and the following description are illustrative in nature, not restrictive.

BRIEF DESCRIPTION OF THE DRAWING

The present invention is illustrated to show examples, not to show limitations, in the figures of the accompanying drawing. In the drawing, the same reference signs and numerals refer to similar elements.
In the drawing:

Figure 1 is a schematic diagram showing an embodiment of the optical transmission system of the present invention.
Figure 2 is a graph showing loss spectra of a zero-water peak fiber and a conventional single-mode fiber.
Figure 3 is a graph showing the results of experiments to clarify the relationship between the power penalty and the extinction ratio of a directly modulated light source.

Figure 4 is a graph showing the results of a simulation to obtain the relationship between the power penalty and the transmission distance.

Figure 5 is a graph showing the results of another simulation to obtain the relationship between the power penalty and the transmission distance.

Figure 6 is a graph showing the results of a simulation to obtain the relationship between the power penalty and the transmission distance on a plurality of optical fibers having different degrees of non-linearity.

Figure 7 is a graph showing the results of another simulation to obtain the relationship between the power penalty and the transmission distance on a plurality of optical fibers having different degrees of non-linearity.

Figure 8 is a graph showing the results of yet another simulation to obtain the relationship between the power penalty and the transmission distance.

DETAILED DESCRIPTION OF THE INVENTION

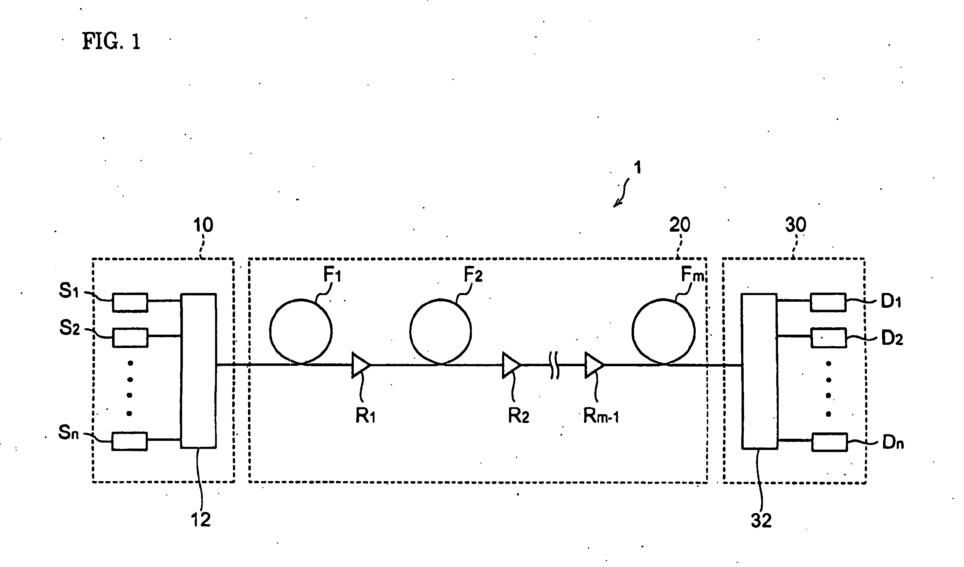

Figure 1 is a schematic diagram showing an embodiment of the optical transmission system of the present invention. An optical transmission system 1 comprises a signal-transmitting portion 10, a transmission portion 20, and a signal-receiving portion 30, which are connected in this order. A signal lightwave outputted from the signal-transmitting portion 10 travels through the transmission portion 20 to arrive at the signal-receiving portion 30.

The signal-transmitting portion 10 comprises $n$ directly modulated light sources $S_1$ to $S_n$ ($n$ is an integer of two or more) and a multiplexer 12. The directly modulated light sources $S_1$ to $S_n$ generate a signal by direct modulation to output it. They generate and output signals having a wavelength different from one another. For example, when $n = 3$, the light sources $S_1$ to $S_3$ may output signals having wavelengths of 1530 nm, 1550 nm, and 1570 nm, respectively. The multiplexer 12 is connected to the individual light sources $S_1$ to $S_n$ to multiplex the signals outputted from them so that the multiplexed signal lightwave can be transmitted.

The signal-transmitting portion 10 is connected to the transmission portion 20. The transmission portion 20 comprises $m$ optical fibers $F_1$ to $F_m$ ($m$ is an integer of two or more) and "$m - 1$" repeaters $R_1$ to $R_{m-1}$. The optical fibers $F_1$ to $F_m$ transmit the signal lightwave outputted from the signal-transmitting portion 10 and are cascade-connected through the repeaters $R_1$ to $R_{m-1}$. In other words, each of the optical fibers $F_1$ to $F_m$ constitutes an optical transmission line in a repeater section. Here, the term "repeater section" is used to mean any of the sections from the signal-transmitting portion 10 to the repeater $R_1$, from the repeater $R_i$ to the neighboring repeater $R_{i+1}$ ($i$ is an integer of at least 1 and at most $m - 2$), and from the repeater $R_{m-1}$ to the signal-receiving portion 30. The repeaters $R_1$ to $R_{m-1}$ amplify the signal lightwave inputted from the optical fibers $F_1$ to $F_{m-1}$,

which are located at the signal-transmitting portion 10's side, to output the amplified signal lightwave to the optical fibers $F_2$ to $F_m$, which are located at the signal-receiving portion 30's side.

In the above description, the optical transmission system 1 uses the optical fibers $F_1$ to $F_m$ having a chromatic dispersion that is negative at at least one wavelength of the signal lightwave and a dispersion slope of at most 0.05 ps/nm$^2$/km in absolute value at the at least one wavelength. The at least one wavelength, for example, is one wavelength, which is 1550 nm.

The transmission portion 20 is connected to the signal-receiving portion 30. The signal-receiving portion 30 comprises a demultiplexer 32 and $n$ optical detectors $D_1$ to $D_n$. The demultiplexer 32 receives the signal lightwave having traveled through the transmission portion 20. As described above, the signal lightwave carries $n$ multiplexed signals having a wavelength different from one another. The demultiplexer 32 separates the signal lightwave in accordance with individual wavelengths to output the separated signals. The demultiplexer 32 is connected to the individual optical detectors $D_1$ to $D_n$, which detect the signals separated and outputted by the demultiplexer 32. In other words, the signals detected by the optical detectors $D_1$ to $D_n$ correspond to those outputted by the directly modulated light source $S_1$ to $S_n$ and have a wavelength different from one another.

The optical transmission system 1 having the above-described structure operates as follows. In the signal-transmitting portion 10, the signals outputted from the directly modulated light sources $S_1$ to $S_n$ are wavelength-multiplexed by the multiplexer 12 and transmitted to the transmission portion 20. In the transmission portion 20, the signal lightwave travels the repeater sections through the optical fibers $F_1$ to $F_m$. In this case, the signal lightwave is amplified by the repeaters $R_1$ to $R_{m-1}$ provided at the portion between the neighboring repeater sections. The signal lightwave having traveled through the transmission portion 20 is received by the signal-receiving portion 30. In the signal-receiving portion 30, the signal lightwave is separated in accordance with individual wavelengths by the demultiplexer 32. The separated signals are detected by the individual optical detectors $D_1$ to $D_n$.

The effect of the optical transmission system 1 is explained below. In the optical transmission system 1, the optical fibers $F_1$ to $F_m$ constituting the optical transmission line in individual repeater section have a chromatic dispersion that is negative at at least one wavelength of the signal lightwave. Therefore, the negative chromatic dispersion can compensate the positive chirp generated at the directly modulated light sources $S_1$ to $S_n$. Consequently, the pulse of the signal having this wavelength is compressed, so that signal degradation can be suppressed. As a result, the signal-receiving sensitivity of the signal-receiving portion 30 can be improved. In addition, the optical fibers $F_1$ to $F_m$ have a dispersion slope of at most 0.05 ps/nm$^2$/km in absolute value at the at least one wavelength. This feature enables the optical fibers $F_1$ to $F_m$ to have nearly the same negative chromatic dispersion throughout a broad wavelength range. Consequently, the optical transmission system 1 enables the WDM transmission that incorporates directly modulated light sources to be performed without relying on dispersion compensation in a broad band. Furthermore, the optical transmission system 1 is low-cost because no external modulator or dispersion compensator is required.

In particular, it is more desirable that the optical fibers $F_1$ to $F_m$ have a dispersion slope of at most 0.03 ps/nm$^2$/km in absolute value at at least one wavelength of the signal lightwave, yet more desirably at most 0.01 ps/nm$^2$/km. In this case, the WDM transmission can be performed suitably in a broader band. For example, when the absolute value of the dispersion slope is more than 0.03 ps/nm$^2$/km, it is impossible to transmit a signal lightwave having a band of more than 100 nm. When it is more than 0.01 ps/nm$^2$/km, it is impossible to transmit a signal lightwave having a band of more than 200 nm.

When the at least one wavelength is one wavelength, which is about 1550 nm, the signal having this wavelength can be transmitted with low loss. In this case, when the optical fibers $F_1$ to $F_m$ have a zero-dispersion wavelength of at least 1610 nm, the wavelength of the foregoing signal can be sufficiently separated from the zero-dispersion wavelength. As a result, generation of the four-wave mixing can be suppressed.

When the signal lightwave carries at least three signals having a wavelength different from one another, such as 1530 nm, 1550 nm, and 1570 nm, and has a wavelength band of not less than 40 nm, the optical transmission system 1 is useful because it can suitably perform the WDM transmission in a broad band, as described above. In addition, when the signal lightwave has a wavelength range of 1510 to 1590 nm, the optical transmission system 1 is more useful. When a signal having a wavelength in the vicinity of 1550 nm and a signal having a wavelength of in the vicinity of 1400 nm are multiplexed in a signal lightwave, the optical transmission system 1 is particularly useful.

It is desirable that each repeater section has a length of at least 75 km, more desirably at least 100 km. The large repeater spacing can reduce the number of repeaters, $R_1$ to $R_{m-1}$. Consequently, the optical transmission system 1 can be structured simply and at low cost. Furthermore, in the optical transmission system 1, as described above, the chirp generated at the directly modulated light sources $S_1$ to $S_n$ can be compensated by the negative dispersion of the optical fibers $F_1$ to $F_m$. Therefore, even when the repeater spacing is large, the signal lightwave can be transmitted suitably.

It is desirable that the optical fibers $F_1$ to $F_m$ have an effective area, $A_{eff}$, of at most 60 $\mu$m$^2$ at at least one wavelength of the signal lightwave, more desirably at most 50 $\mu$m$^2$. In this case, the ratio $n_2/A_{eff}$ becomes large, where $n_2$ is the non-linear refractive index of the

optical fibers $F_1$ to $F_m$. As a result, the non-linearity is increased, increasing the effect of the negative chirp due to the self-phase modulation (SPM) of the optical fibers $F_1$ to $F_m$ on the compensation of the positive chirp due to the direct modulation.

It is desirable that the optical fibers $F_1$ to $F_m$ have a feature expressed by the following formula:

$$\gamma\, P_{in} > 1.51 \times 10^{-6}/\text{m},$$

where $\gamma$ is the non-linearity constant at at least one wavelength of the signal lightwave, and
$P_{in}$ is the power of the signal lightwave to be inputted.
In this case, also, the non-linearity is increased, increasing the effect of the negative chirp due to the SPM of the optical fibers $F_1$ to $F_m$ on the compensation of the positive chirp due to the direct modulation.

It is desirable that the optical fibers $F_1$ to $F_m$ have a 2-m cutoff wavelength of at most 1600 nm. In this case, the signal lightwave can be prevented from shifting to multimode transmission even after traveling over several tens of kilometers.

It is desirable that the optical fibers $F_1$ to $F_m$ have a chromatic dispersion of at least -16 ps/nm/km at at least one wavelength of the signal lightwave, more desirably at least -8 ps/nm/km, yet more desirably at least -4 ps/nm/km. In these cases. the accumulated dispersion of the optical fibers $F_1$ to $F_m$ can be suppressed to a small value, so that the transmission distance of the signal lightwave can be further increased.

It is desirable that the optical fibers $F_1$ to $F_m$ have a chromatic dispersion of at least -16 ps/nm/km and at most 0 ps/nm/km at all the wavelengths of the signal lightwave, more desirably at least -8 ps/nm/km and at most 0 ps/nm/km. In these cases, all the signals can be transmitted suitably over a long distance. It is yet more desirable that the chromatic dispersion be at least -16 ps/nm/km and at most -2 ps/nm/km at all the wavelengths. In this case, transmission degradation due to the non-linear interaction between signals can be prevented.

In the above description, the range of all the wavelengths is, for example, from 1400 nm to 1600 nm. In this case, despite the broad band of 200 nm, all the signals in this range can be transmitted suitably over a long distance. Furthermore, the range of all the wavelengths may be from 1300 nm to 1600 nm. In this case, despite the significantly broad band of 300 nm, all the signals in this range can be transmitted suitably over a long distance.

The $\alpha$ parameter of the or each signal corresponding to the at least one wavelength may be at least 1.0 at the output end of the corresponding light source in the directly modulated light sources $S_1$ to $S_n$. In the optical transmission system 1, even when the extinction ratio of the light sources $S_1$ to $S_n$ is increased to such an

extent that the $\alpha$ parameter becomes at least 1.0, the positive chirp generated at the light sources $S_1$ to $S_n$ can be compensated sufficiently by the negative chromatic dispersion of the optical fibers $F_1$ to $F_m$. Furthermore, the $\alpha$ parameter of the or each signal corresponding to the at least one wavelength may be at least 3.0 at the output end of the corresponding light source in the directly modulated light sources $S_1$ to $S_n$. In this case, the extinction ratio of the light sources $S_1$ to $S_n$ can be further increased.

It is desirable that when the or each signal corresponding to the at least one wavelength has a bit rate of $B$ Gb/s, the optical fibers $F_1$ to $F_m$ have such an accumulated dispersion that the entire signal-transmitting portion 20 has a total accumulated dispersion of at least -80,000/$B^2$ ps/nm and at most 0 ps/nm at the or each wavelength. In this case, the or each signal can be transmitted suitably over a long distance. In addition, when the entire signal-transmitting portion 20 has a total accumulated dispersion of at least -20,000/$B^2$ ps/nm and at most 0 ps/nm at the or each wavelength, the or each signal can be transmitted suitably over a long distance with a sufficient transmission margin.

It is desirable that the optical fibers $F_1$ to $F_m$ have a transmission loss lower at a wavelength of 1380 nm than at a wavelength of 1310 nm. In addition, it is desirable that the optical fibers $F_1$ to $F_m$ have an OH absorption of nearly zero at a wavelength of 1380 nm. In these cases, even a signal lightwave having a wavelength in the vicinity of 1380 nm can be transmitted suitably. This condition enables the C-WDM transmission in the full spectrum (1300 to 1600 nm). This condition also enables the dense-WDM transmission at a 1380-nm band. Furthermore, when the signal lightwave is Raman-amplified in the transmission at the S-band (1460 to 1530 nm), the excited light having a wavelength in the vicinity of 1380 nm can be supplied efficiently.

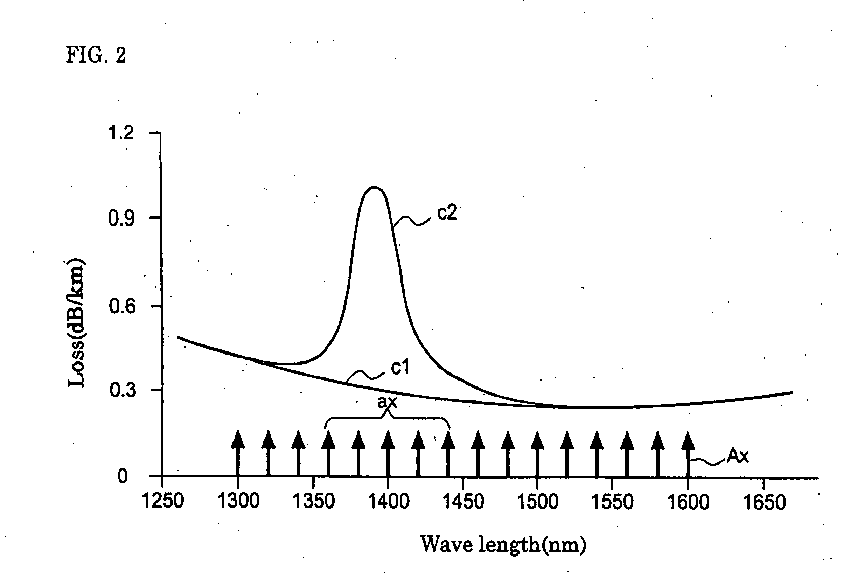

The types of the optical fiber having a transmission loss lower at a wavelength of 1380 nm than at a wavelength of 1310 nm include a zero-water peak fiber (ZWPF). Figure 2 is a graph showing loss spectra of a ZWPF and a conventional single-mode fiber (SMF). In the graph, the abscissa represents the wavelength and the ordinate represents the optical fiber's loss per unit length (dB/km). Curves $c1$ and $c2$ show loss spectra of a ZWPF and a conventional SMF, respectively. Curve $c2$ coincides with a loss spectrum of a conventional nonzero dispersion-shifted fiber (NZ-DSF).

As can be seen from curve $c2$, a conventional SMF and a conventional NZ-DSF have a large loss peak in the vicinity of 1380 nm. The peak is resulted from the light absorption by the OH group. In contrast, curve $c1$ shows that a ZWPF has no such a peak in the vicinity of 1380 nm. In other words, the ZWPF has a transmission loss lower at a wavelength of 1380 nm than at a wavelength of 1310 nm.

As an example, signal wavelengths are selected at intervals of 20 nm in a wavelength range of 1300 to 1600 nm. As shown by arrows "Ax" in Fig. 2, 16 signal wavelengths can be used at the maximum. However, in the conventional SMF and NZ-DSF, the large loss peak prohibits the use of the signal wavelengths in the vicinity of 1380 nm, specifically 5 signal wavelengths lying in the range of 1360 to 1440 nm as indicated by arrows "ax." On the other hand, the ZWPF allows the use of all the 16 signal wavelengths. As a result, it can increase the transmission capacity by no less than 30% in comparison with the conventional SMF and NZ-DSF.

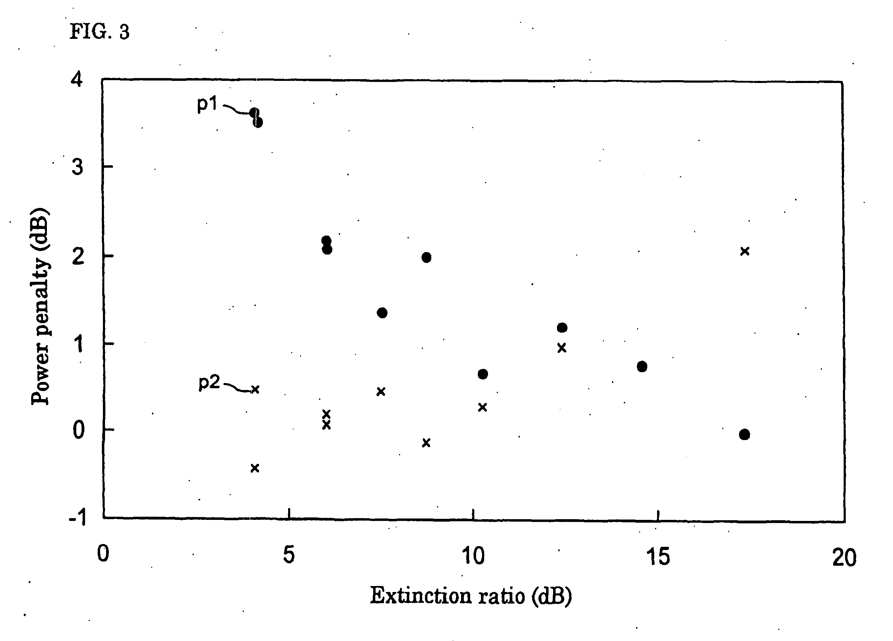

Figure 3 is a graph showing the results of an experiment to clarify the relationship between the power penalty and the extinction ratio of a directly modulated light source. In the graph, the abscissa represents the extinction ratio (dB) and the ordinate represents the power penalty (dB). In the experiment, a laser diode (LD) was used as the directly modulated light source. The LD operated at a bit rate of 2.5 Gb/s. The extinction ratio was varied by adjusting the parameters such as the modulation condition of the LD. The signal-receiving sensitivity for individual extinction ratio was measured by detecting the signal lightwave with a PIN photodiode.

First, the PIN photodiode was directly connected to the LD (back-to-back connection) to detect the signal lightwave. The measured signal-receiving sensitivity was converted into the power penalty. The obtained power penalties are shown by the mark "●" indicated by the sign "p1" in the graph. The power penalties shown by the mark "●" are relative values obtained when the power penalty for the extinction ratio of 17 dB is used as the reference (0 dB). As can be seen from the result, as the extinction ratio increases, the power penalty decreases, increasing the signal-receiving sensitivity. Next, the PIN photodiode was connected to the LD through a chromatic dispersion of 1600 ps/nm to carry out measurements similar to those described above. The obtained power penalties are shown by the mark "×" indicated by the sign "p2" in the graph. In this case, as the extinction ratio increases, the power penalty increases, decreasing the signal-receiving sensitivity. The likely reason for this is that because the driving conditions of the LD was adjusted so as to increase the extinction ratio, the amount of the generated chirp increased, decreasing the dispersion tolerance.

As described above, as in the optical transmission system 1, the proper adjustment of the chromatic dispersion of the optical fiber constituting an optical transmission line is highly significant in suppressing the decrease in the dispersion tolerance to improve the signal-receiving sensitivity.

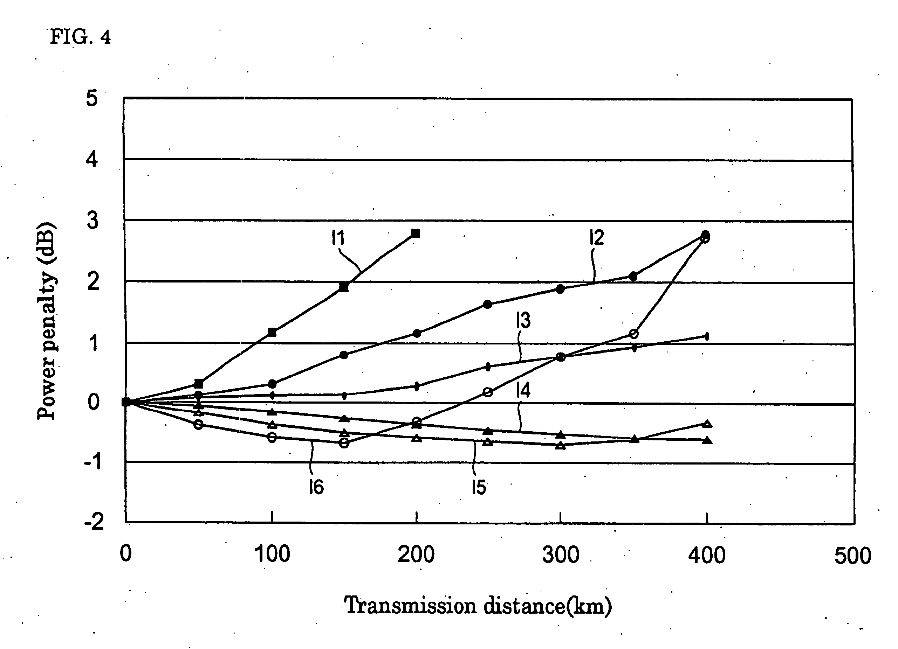

Figure 4 is a graph showing the results of a simulation to obtain the relationship between the power penalty and the transmission distance. In the graph, the abscissa represents the transmission distance and the ordinate represents the power penalty (dB). As a model, the same LD as used in the case of Fig. 3 was used as the light source. The driving conditions of the LD were as follows:

Bias current for modulation $I_{bias}$: 1.3 $\times$ $I_{th}$($I_{th}$: oscillation threshold current of the LD)

Modulation amplitude of the modulating current $I_m$: 0.9 $\times$ $I_{th}$

Output power: 4.5 mW.

In this case, the extinction ratio was 6 dB. The optical fiber used to form the optical transmission line had the following properties:

Transmission loss: 0.2 dB/km

Dispersion slope: 0 ps/nm$^2$/km

Non-linear refractive index $n_2$: 0.

The optical amplifiers used were noise free, and only post- and pre-amplifiers were used.

In the graph, lines 11, 12, 13, 14, 15, and 16 respectively show the simulation results when the optical fibers had a chromatic dispersion of +32, +16, +8, - 8, -16, and -32 ps/nm/km. The power penalties shown by the lines 11 to 16 were obtained by using the signal-receiving sensitivity obtained when the measurements were carried out with the back-to-back connection as the reference.

As can be seen from the lines 11 to 13, when optical fibers having a positive chromatic dispersion were used, as the transmission distance increases, the power penalty increases monotonously. Here, the term "transmittable distance" is defined as the transmission distance at which the power penalty reaches 1 dB in individual optical fibers having different chromatic dispersions. The graph shows that the optical fibers having chromatic dispersions of 32, 16, and 8 ps/nm/km have transmittable distances of about 90 km, about 180 km, and about 360 km, respectively.

On the other hand, as can be seen from the lines 14 and 15, when the chromatic dispersion is -8 and -16 ps/nm/km, a transmittable distance of more than 400 km can be achieved. Moreover, the power penalty is negative even after the transmission through 400 km. In other words, the transmission property is improved, rather than degraded. The reason for this improvement in transmission property is that because the positive chirp due to the direct modulation is compensated by the negative dispersion of the optical fiber, the signal pulse is compressed. Nevertheless, even when the chromatic dispersion is negative, if the absolute value is excessively large, the transmittable distance is decreased. More specifically, as can be seen from the line 16, when the chromatic dispersion is -32 ps/nm/km, the transmittable distance is about 320 km. The reason is that even when the chromatic dispersion is negative, if the absolute value of the accumulated dispersion is excessively large, the transmission property is degraded.

As described above, the use of the optical fiber having a chromatic dispersion of -32 ps/nm/km or so is limited to the optical transmission system that performs a short-haul transmission less than 300 km in transmission distance. On the other hand, the optical fiber having a negative chromatic dispersion of at least -16 ps/nm/km can be used suitably as the transmission line in the optical transmission system that performs a long-haul transmission at least 300 km in transmission distance.

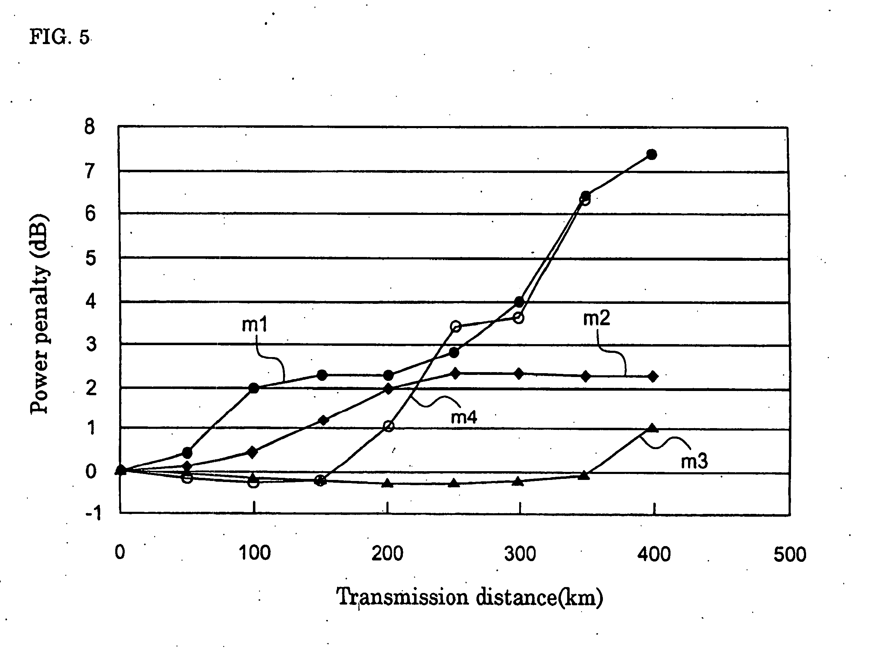

Figure 5 is a graph showing the results of another simulation to obtain the relationship between the power penalty and the transmission distance when the LD is driven under conditions different from those used in the case of Fig. 4. In this simulation, the driving conditions of the LD were as follows:

Bias current for modulation $I_{bias}$: 1.1 $\times$ $I_{th}$ ($I_{th}$: oscillation threshold current of the LD)

Modulation amplitude of the modulating current $I_m$: 1.9 $\times$ $I_{th}$

Output power: 6.2 mW.

In this case, the extinction ratio was 17 dB. Other conditions were the same as in the case of Fig. 4. In the graph, lines m1, m2, m3, and m4 respectively show the simulation results when the optical fibers had a chromatic dispersion of +16, +8, -8, and -16 ps/nm/km.

The graph shows that the optical fibers having chromatic dispersions of +16 and +8 ps/nm/km have transmittable distances of about 70 km and about 140 km, respectively. On the other hand, when the chromatic dispersions are -8 and -16 ps/nm/km, the transmittable distances are about 400 km and about 200 km, respectively. Obviously, the obtained transmittable distances are shorter than those shown in Fig. 4. The likely reason is that the above-described increase in extinction ratio decreased the dispersion tolerance.

Therefore, under the LD-driving conditions in the case of Fig. 5, although the chromatic dispersion is -16 ps/nm/km, the absolute value is excessively large. On the other hand, the optical fiber having a negative chromatic dispersion of at least -8 ps/nm/km can be used suitably as the transmission line even in the optical transmission system that performs a long-haul transmission at least 300 km in transmission distance. Furthermore, it can be expected that the optical fiber having a negative chromatic dispersion of at least - 4 ps/nm/km will be used for a transmission through at least 400 km.

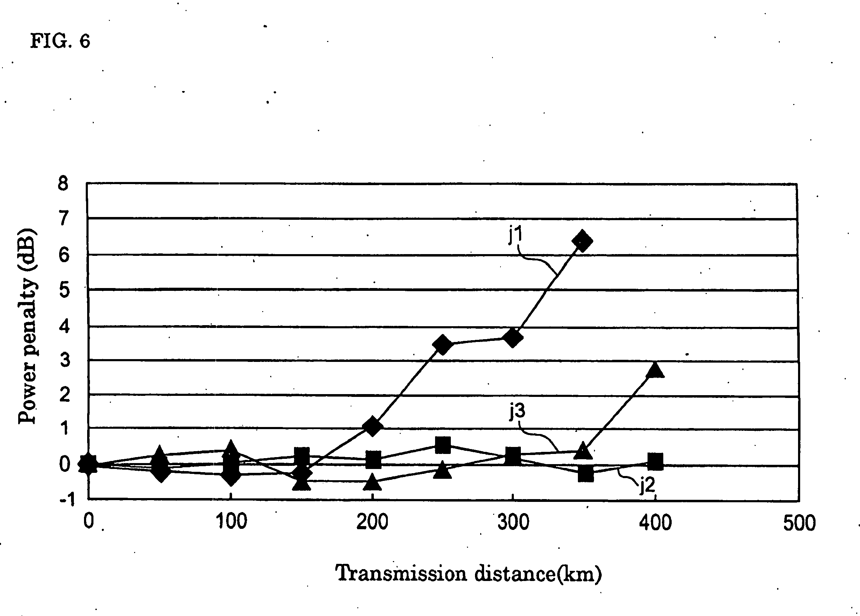

Figure 6 is a graph showing the results of a simulation to obtain the relationship between the power penalty and the transmission distance on a plurality of optical fibers having different degrees of non-linearity. The driving conditions of the LD were the same as in the case of Fig. 5. The optical fiber had a chromatic dispersion of -16 ps/nm/km. Lines j1, j2, and j3 respectively show the simulation results when the optical fibers had a ratio, $n_2/A_{eff}$ of $0 \times 10^{-10}$, $15 \times 10^{-10}$, and $3.3 \times 10^{-10}$/W, where $n_2$ is the non-linear refractive index and $A_{eff}$ is the effective area.

As can be seen from the graph, as the ratio $n_2/A_{eff}$ increases, i.e., as the non-linearity increases, the transmittable distance increases, improving the transmission property. As described above, the likely reason is that the negative chirp due to the self-phase modulation compensates the positive chirp due to the direct modulation.

In an actual metropolitan system, it is considered appropriate that the maximum input power per wavelength of the signal lightwave be about 6 dBm and the non-linear refractive index $n_2$ of the optical fiber be about $3.0 \times 10^{-20}$ m$^2$/W. Consequently, when the optical fiber constituting the optical transmission line has an effective area, $A_{eff}$, of at most 60 $\mu$m$^2$, the ratio $n_2/A_{eff}$ becomes at least $5.0 \times 10^{-10}$ /W. This value can achieve a superior transmission property exceeding the property shown by the line j3, which has a ratio, $n_2/A_{eff}$, of $3.3 \times 10^{-10}$ /W. In addition, in view of the system margin of at least 10%, it is desirable that the magnitude of $A_{eff}$ be at most 50 $\mu$m$^2$. In this case, optical transmission exceeding 350 km can be performed suitably.

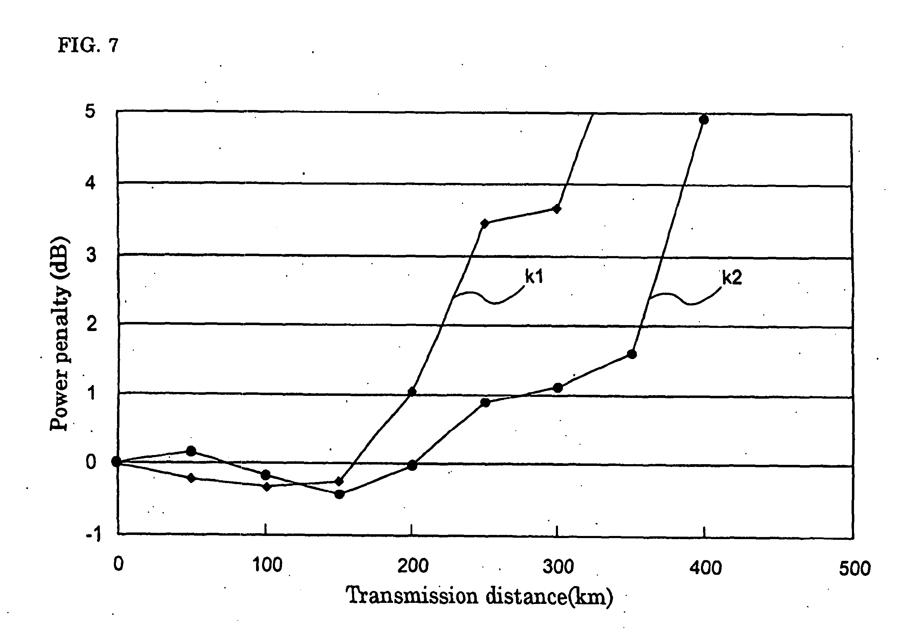

Figure 7 is a graph showing the results of another simulation to obtain the relationship between the power penalty and the transmission distance on a plurality of optical fibers having different degrees of non-linearity. This simulation was conducted by using a different type of parameter from that used in the case of Fig. 6. The driving conditions of the PD were the same as in the case of Fig. 5. The optical fiber had a chromatic dispersion of -16 ps/nm/km. Lines k1 and k2 respectively show the simulation results when the optical fibers had a product, $\gamma P_{in}$, of $0 \times 10^{-6}$ and $1.51 \times 10^{-6}$ /m, where $\gamma$ is a non-linearity constant and $P_{in}$ is the power of the signal lightwave to be inputted into the optical fiber. In the above description, $\gamma$ is given by the formula $(2\pi n_2)/(\lambda A_{eff})$, where $\lambda$ is the wavelength of the signal lightwave, which is 1550 nm in this case.

The graph together with the data in Fig. 6 shows that the magnitude of at least $1.51 \times 10^{-6}$/m in $\gamma P_{in}$ enables the achievement of optical transmission through at least 250 km, which is considered to be long-haul transmission in a metropolitan system.

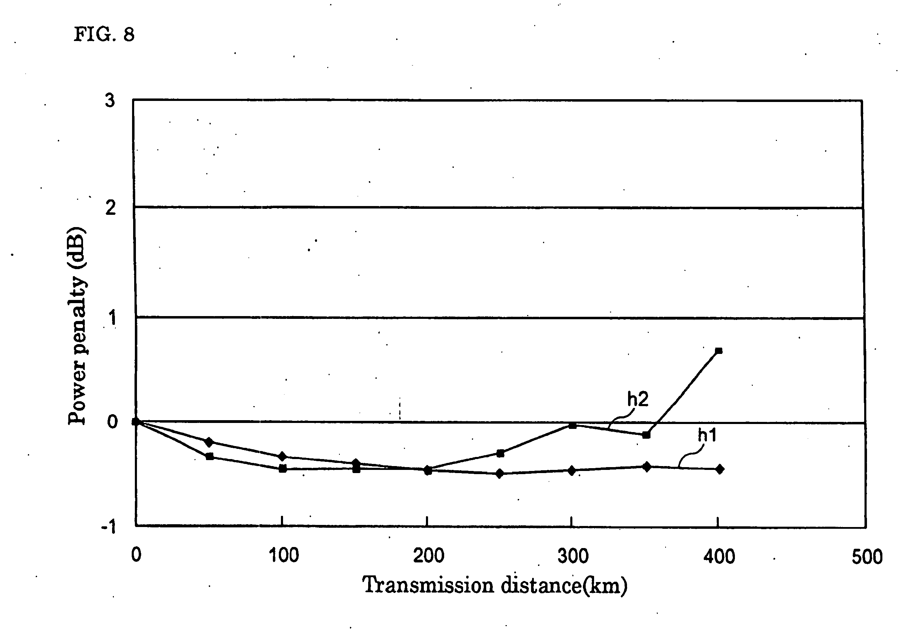

Figure 8 is a graph showing the results of a simulation to obtain the relationship between the power penalty and the transmission distance when the LD is driven under conditions different from those used in the case of Fig. 4. In this simulation, the driving conditions of the LD were as follows:

Bias current for modulation $I$: $1.65 \times I_{th}$
Modulation amplitude of the modulating current $I_m$: $0.95 \times I_{th}$.

In this case, the extinction ratio was 4 dB. In the graph, lines h1 and h2 respectively show the simulation results when the optical fibers had a chromatic dispersion of -16 and -32 ps/nm/km.

As can be seen from the graph, even when the chromatic dispersion is -32 ps/nm/km, the transmittable distance exceeds 400 km. In other words, the proper adjustment of the modulation conditions enables the achievement of a dispersion tolerance of -12,800 ps/nm. The dispersion tolerance is usually inversely proportional to the square of the bit rate. On the assumption that this relationship could also be applied to the direct modulation, the dispersion tolerance of -12,800 ps/nm can generally be expressed as -80,000/$B^2$ ps/nm by incorporating the bit rate $B$. Therefore, when the entire optical transmission line has an accumulated dispersion of at least -80,000/B$^2$ ps/nm and at most 0 ps/nm, the optical transmission can be performed suitably.

The present invention is described above in connection with what is presently considered to be the most practical and preferred embodiments. However, the invention is not limited to the disclosed embodiments, but, on the contrary, is intended to cover various modifications and equivalent arrangements included within the scope of the appended claims.

For example, in Fig. 1, the entire optical transmission lines in the individual repeater sections are constituted by the optical fibers $F_1$ to $F_m$, respectively. However, parts of the optical transmission lines in the individual repeater sections may be constituted by the optical fibers $F_1$ to $F_m$, respectively. In Fig. 1, the sign "n" means the number of directly modulated light sources and optical detectors, and "n = 1" may be employed. In this case, it is not necessary to provide the multiplexer 12 and the demultiplexer 32. Similarly, in Fig. 1, the sign "m" means the number of optical fibers, hence the number of repeater sections, and "m = 1" may be employed. In this case, no repeater is required.

## Claims

1. An optical transmission system (1), comprising:

   a) at least one directly modulated light source $[(S_1,..,S_n)]$ for generating and outputting a signal by direct modulation; and
   b) at least one optical fiber (F) that:

   b1) constitutes the principal portion of an optical transmission line at at least one repeater section ($R_i$-$R_{i+1}$);
   b2) is adapted to transmit a signal lightwave carrying at least one signal outputted by the at least one directly modulated light source;
   (b3) has a chromatic dispersion that is negative at at least one wavelength of the signal lightwave;
   **characterized in that**
   b4) the optical fiber (F) has a dispersion slope of at most 0.05 ps/nm$^2$/km in absolute value at the at least one wavelength.

2. An optical transmission system (1) as defined by claim 1, wherein the signal lightwave carries at least three signals having a wavelength different from one another and has a wavelength band of not less than 40 nm.

3. An optical transmission system (1) as defined by claim 1, wherein:

   a) the at least one wavelength is one wavelength, the wavelength being about 1550 nm; and
   b) the at least one optical fiber has a zero-dispersion wavelength of at least 1610 nm.

4. An optical transmission system as defined by claim 1, wherein the at least one optical fiber (F) has an effective area of at most 60 $\mu m^2$ at the at least one wavelength.

5. An optical transmission system (1) as defined by claim 1, wherein the at least one optical fiber (F) has a 2-m cutoff wavelength of at most 1600 nm.

6. An optical transmission system (1) as defined by claim 1, wherein the at least one optical fiber has a chromatic dispersion of at least -16 ps/nm/km at the at least one wavelength.

7. An optical transmission system (1) as defined by claim 1, wherein the at least one optical fiber (F) has a chromatic dispersion of at least -16 ps/nm/km and at most 0 ps/nm/km at all the wavelengths of the signal lightwave.

8. An optical transmission system (1) as defined by claim 1, wherein the or each signal corresponding to the at least one wavelength has an a parameter of at least 1.0 at the output end of the corresponding directly modulated light source (S).

9. An optical transmission system (1) as defined by claim 1, wherein the at least one optical fiber (F) has a feature expressed by the formula

$$\gamma \, P_{in} > 1.51 \times 10^{-6}/m,$$

where y is the non-linearity constant at the at least one wavelength, and
$P_{in_i}$ is the power of the signal lightwave to be inputted into the at least one optical fiber (F).

10. An optical transmission system (1) as defined by claim 1, wherein when the or each signal corresponding to the at least one wavelength has a bit rate of B Gb/s, the total accumulated dispersion from the signal transmitting end to the signal-receiving end is at least $-80,000/B^2$ ps/nm and at most 0 ps/nm at the or each wavelength.

11. An optical transmission system (1) as defined by claim 1, wherein the at least one repeater section (Ri-R$_{i+1}$) has a length of at least 75 km.

**Patentansprüche**

1. Optisches Übertragungssystem (1), umfassend:

   a) zumindest eine direkt modulierte Lichtquelle [(S$_1$, ..., S$_n$) zum Erzeugen und Ausgeben eines Signals durch direkte Modulation; und
   b) zumindest einen optischen Leiter (F), der:

      b1) den Hauptteil einer optischen Übertragungsleitung an zumindest einer Wiederholerabschnitt (R$_i$-R$_{i+1}$) bildet;
      b2) dafür ausgelegt ist, eine Signallichtwelle zu übertragen, die zumindest ein, durch die zumindest eine direkt modulierte Lichtquelle ausgegebenes Signal trägt;
      b3) eine chromatische Dispersion aufweist, die zumindest bei einer Wellenlänge der Signallichtwelle negativ ist;
      **dadurch gekennzeichnet, dass**
      b4) der optische Leiter (F) eine Dispersionssteigung von maximal 0,05 ps/nm$^2$/km als Absolutwert bei der zumindest einen Wellenlänge aufweist.

2. Optisches Übertragungssystem (1) wie in Anspruch 1 definiert, wobei die Signallichtwelle zumindest drei Signale mit voneinander unterschiedlichen Wellenlängen trägt und ein Wellenlängenband von nicht weniger als 40 nm aufweist.

3. Optisches Übertragungssystem (1), wie in Anspruch 1 definiert, wobei:

   a) die zumindest eine Wellenlänge eine Wellenlänge ist, wobei die Wellenlänge etwa 1150 nm ist; und
   b) der zumindest eine optische Leiter eine Nulldispersionswellenlänge von zumindest 1610 nm aufweist.

4. Optisches Übertragungssystem wie in Anspruch 1 definiert, wobei der zumindest eine optische Leiter (F) eine effektive Fläche von höchstens 60 $\mu m^2$ bei der zumindest einen Wellenlänge aufweist.

5. Optisches Übertragungssystem (1) wie in Anspruch 1 definiert, wobei der zumindest eine optische Leiter (F) eine 2-m Grenzwellenlänge von höchstens 1600 nm aufweist.

6. Optisches Übertragungssystem (1) wie in Anspruch 1 definiert, wobei der zumindest eine optische Leiter eine chromatische Dispersion von zumindest -16 ps/nm/km bei der zumindest einen Wellenlänge aufweist.

7. Optisches Übertragungssystem (1) wie in Anspruch 1 definiert, wobei der zumindest eine optische Leiter (f) eine chromatische Dispersion von zumindest -16 ps/nm/km und höchstens 0 ps/nm/km bei allen Wellenlängen der Signallichtwelle aufweist.

8. Optisches Übertragungssystem (1) wie in Anspruch 1 definiert, wobei das oder jedes Signal entsprechend der zumindest einen Wellenlänge einen $\alpha$-Parameter von zumindest 1,0 am Ausgabeende der korrespondierenden, direkt modulierten Lichtquelle (S) aufweist.

9. Optisches Übertragungssystem (1) wie in Anspruch 1 definiert, wobei der zumindest eine optische Leiter (F) ein durch die Formel

$$\gamma\ P_{in}> 1,51\ x\ 10^{-6}/m$$

ausgedrücktes Merkmal aufweist, wobei y die nichtlineare Konstante bei der zumindest einen Wellenlänge ist und $P_{in\ i}$ die Leistung der Signallichtwelle, die in den zumindest einen optischen Leiter (F) einzugeben ist, ist.

10. Optisches Übertragungssystem (1) wie in Anspruch 1 definiert, wobei, wenn das oder jedes Signal, dass zu der zumindest einen Wellenlänge korrespondiert, eine Bitrate von B Gb/s aufweist, die akkumulierte Gesamtdispersion aus dem Signalübertragungsende zum Signalempfangsende zumindest $-80.000/B^2$ ps/nm und höchstens 0 ps/nm bei der oder jeder Wellenlänge ist.

11. Optisches Übertragungssystem (1) wie in Anspruch 1 definiert, wobei der zumindest eine Wiederholerabschnitt (Ri-$R_{i+1}$) eine Länge von zumindest 75 km aufweist.

**Revendications**

1. Système de transmission optique (1), comprenant :

   a) au moins une source de lumière modulée directement [(S$_1$, ..., S$_n$)] pour générer et délivrer un signal par modulation directe ; et
   b) au moins une fibre optique (F) qui :

   b1) constitue la partie principale d'une ligne de transmission optique au niveau d'au moins une section de répéteur (R$_i$ - R$_{i+1}$) ;

   b2) est adaptée pour transmettre une onde de lumière de signal transportant au moins un signal délivré par ladite au moins une source de lumière modulée directement ;
   b3) a une dispersion chromatique qui est négative à au moins une longueur d'onde de l'onde de lumière de signal ;
   **caractérisé en ce que**
   b4) la fibre optique (F) a une pente de dispersion d'au plus 0,05 ps/nm$^2$/km en valeur absolue à ladite au moins une longueur d'onde.

2. Système de transmission optique (1) selon la revendication 1, dans lequel l'onde de lumière de signal (15) transporte au moins trois signaux ayant des longueurs d'onde différentes les unes des autres et a une bande de longueurs d'onde supérieure ou égale à 40 nm.

3. Système de transmission optique (1) selon la revendication 1, dans lequel :

   a) ladite au moins une longueur d'onde est une longueur d'onde, la longueur d'onde étant d'environ 1550 nm ; et
   b) ladite au moins une fibre optique a une longueur d'onde à dispersion nulle d'au moins 1610 nm.

4. Système de transmission optique selon la revendication 1, dans lequel ladite au moins une fibre optique (F) a une aire efficace d'au plus 60 $\mu$m$^2$ à ladite au moins une longueur d'onde.

5. Système de transmission optique (1) selon la revendication 1, dans lequel ladite au moins une fibre optique (F) a une longueur d'onde de coupure 2-m d'au plus 1600 nm.

6. Système de transmission optique (1) selon la revendication 1, dans lequel ladite au moins une fibre optique a une dispersion chromatique d'au moins -16 ps/nm/km à ladite au moins une longueur d'onde.

7. Système de transmission optique (1) selon la revendication 1, dans lequel ladite au moins une fibre optique (F) a une dispersion chromatique d'au moins -16 ps/nm/km et d'au plus 0 ps/nm/km à toutes les longueurs d'onde de l'onde de lumière de signal.

8. Système de transmission optique (1) selon la revendication 1, dans lequel le ou chaque signal correspondant à ladite au moins une longueur d'onde a un paramètre $\alpha$ d'au moins 1,0 à l'extrémité de sortie de la source de lumière modulée directement (S) correspondante.

**9.** Système de transmission optique (1) selon la revendication 1, dans lequel ladite au moins une fibre optique (F) a une caractéristique exprimée par la formule :

$$\gamma Pin > 1{,}51 \times 10^{-6}/m,$$

où γ est la constante de non linéarité à ladite au moins une longueur d'onde, et
$Pin_i$ est la puissance de l'onde de lumière de signal à appliquer à ladite au moins une fibre optique (F).

**10.** Système de transmission optique (1) selon la revendication 1, dans lequel, lorsque le ou chaque signal correspondant à ladite au moins une longueur d'onde a un débit binaire de B Gb/s, la dispersion accumulée totale de l'extrémité de transmission de signal à l'extrémité de réception de signal est d'au moins -80 000/$B^2$ ps/nm et d'au plus 0 ps/nm à la ou à chaque longueur d'onde.

**11.** Système de transmission optique (1) selon la revendication 1, dans lequel ladite au moins une section de répéteur ($R_i$-$R_{i+1}$) a une longueur d'au moins 75 km.

FIG. 1

EP 1 471 669 B1

EP 1 471 669 B1

FIG. 2

FIG. 3

EP 1 471 669 B1

FIG. 4

EP 1 471 669 B1

FIG. 5

EP 1 471 669 B1

FIG. 6

EP 1 471 669 B1

FIG. 7

FIG. 8

EP 1 471 669 B1

**EP 1 471 669 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Optics Letters,* 1988, vol. 13 (11), 1035

- *ECOC,* 2000, vol. 1, 97